# EUROPÄISCHE PATENTSCHRIFT

(11) **EP 3 825 545 B1**
(45) Veröffentlichungstag und Bekanntmachung des Hinweises auf die Patenterteilung: **01.06.2022**
(21) Anmeldenummer: 20205258.5
(22) Anmeldetag: 02.11.2020
(51) Int. Cl.: F03D 1/06, F03D 80/70

(54) **ROTORBLATT, ROTOR UND WINDENERGIEANLAGE SOWIE VERFAHREN**
ROTOR BLADE, ROTOR AND WIND TURBINE AND METHOD
PALE DE ROTOR, ROTOR ET ÉOLIENNE, AINSI QUE PROCÉDÉ

(30) Priorität: 21.11.2019 DE 102019131493
(43) Veröffentlichungstag der Anmeldung: 26.05.2021
(73) Patentinhaber: Wobben Properties GmbH, 26607 Aurich (DE)
(72) Erfinder: Gudewer, Wilko, 26506 Norden (DE); Schmid, Jonas, 26655 Westerstede (DE); Fleßner, Thorsten, 26607 Aurich (DE); Gloystein, Nico, 26655 Westerstede (DE)
(74) Vertreter: Eisenführ Speiser

(56) Entgegenhaltungen:
- WO-A1-2012/175204
- DE-A1-102007 032 937
- US-A1- 2019 331 091

## Beschreibung

Die Erfindung betrifft ein Rotorblatt für einen Rotor einer Windenergieanlage, einen Rotor für eine Windenergieanlage, eine Windenergieanlage mit einem Rotorblatt und/oder mit einem Rotor sowie ein Verfahren zur Verbindung eines Rotorblatts an einer Nabe eines Rotors einer Windenergieanlage.

Windenergieanlagen weisen in der Regel einen Turm und eine Gondel auf dem Turm auf. An der Gondel ist meist ein aerodynamischer Rotor mit in der Regel 3 an einer Nabe befestigten Rotorblättern vorgesehen. Ein solcher aerodynamischer Rotor kann bei Windenergieanlagen heutiger Größenordnungen in der Regel nicht mehr als Ganzes transportiert werden. Die Rotorblätter werden daher in der Regel separat gefertigt und vor Ort mit der Nabe verbunden. An diese Verbindung zwischen Rotorblatt und Nabe sind hohe Anforderungen zu stellen, zum einen was die Sicherheit und Zuverlässigkeit der Verbindung, insbesondere im Betrieb der Windenergieanlage, angeht, zum anderen jedoch auch an die Montagefreundlichkeit sowie Möglichkeiten der Inspektion, Wartung und gegebenenfalls Reparatur.

Das Deutsche Patent- und Markenamt hat in der Prioritätsanmeldung zu vorliegender Anmeldung folgenden Stand der Technik recherchiert: DE 10 2007 032 937 A1, DE 10 2007 052 383 A1, DE 10 2016 203 269 A1, EP 2 527 676 A1, WO 2012/ 175 204 A1.

Die DE 10 2007 032 937 A1 beschreibt eine Schutzvorrichtung zum Schutz eines Blattlagers einer Windenergieanlage, die in einer Betriebsposition das Blattlager zumindest teilweise abdeckt, so dass dieses vor einem Eindringen von Feuchtigkeit geschützt ist, und dass die Schutzvorrichtung aus der Betriebsposition in eine Wartungsposition bewegt werden kann, in der zumindest ein Teil des Blattlagers von außen zugänglich ist.

Es ist daher eine Aufgabe der vorliegenden Erfindung, ein verbessertes Rotorblatt für einen Rotor einer Windenergieanlage, einen verbesserten Rotor für eine Windenergieanlage, eine verbesserte Windenergieanlage mit einem Rotorblatt und/oder mit einem Rotor sowie ein verbessertes Verfahren zur Verbindung eines Rotorblatts an einer Nabe eines Rotors einer Windenergieanlage bereitzustellen.

Insbesondere ist es eine Aufgabe der vorliegenden Erfindung, ein Rotorblatt für einen Rotor einer Windenergieanlage, einen Rotor für eine Windenergieanlage, eine Windenergieanlage mit einem Rotorblatt und/oder mit einem Rotor sowie ein Verfahren zur Verbindung eines Rotorblatts an einer Nabe eines Rotors einer Windenergieanlage bereitzustellen, welche eine sichere und zuverlässige Verbindung, insbesondere im Betrieb der Windenergieanlage, sicherstellen und gleichzeitig eine montage- und servicefreundliche sowie kostengünstige Lösung darstellen.

Diese Aufgabe wird gelöst durch ein Rotorblatt für einen Rotor einer Windenergieanlage nach Anspruch 1.

Das hier beschriebene Rotorblatt ist für eine Befestigung an einer Nabe eines Rotors einer Windenergieanlage vorgesehen. Ein Rotorblatt weist in der Regel eine Rotorblattspitze auf, sowie ein nabenseitiges Ende, welches in der Regel der Rotorblattspitze gegenüberliegt. Das nabenseitige Ende eines Rotorblatts weist vorzugsweise eine ebene und/oder ringförmige Stirnfläche auf. Mit diesem nabenseitigen Ende kann das Rotorblatt an einer Nabe eines Rotors befestigt werden.

Teilweise ist bei Windenergieanlagen vorgesehen, dass zwischen der Nabe und dem Rotorblatt ein Adapterelement vorgesehen ist, welches auch als Nabenadapter bezeichnet werden kann. In der hier vorliegenden Anmeldung umfasst der Begriff Nabe vorzugsweise auch weitere möglicherweise vorgesehen Elemente, wie z.B. Nabenadapter.

Angaben wie radial, axial, in Umfangsrichtung etc. beziehen sich, sofern nicht anders angegeben, auf eine Längsachse eines Rotorblatts.

Die Befestigung des Rotorblatts an der Nabe erfolgt in der Regel über ein Blattlager, welches einen beweglichen Teil sowie einen feststehenden Teil aufweist. Am beweglichen Teil des Blattlagers wird das Rotorblatt mit seinem nabenseitigen Ende befestigt. Der feststehende Teil des Blattlagers ist vorzugsweise an der Nabe angeordnet und kann an der Nabe beispielsweise lösbar befestigt sein oder auch als Teil der Nabe ausgebildet sein. Der feststehende Teil des Blattlagers ist feststehend gegenüber der Nabe, vollzieht jedoch vorzugsweise die Bewegungen der Nabe (beispielsweise Drehbewegungen des Rotors) mit. Der bewegliche Teil des Blattlagers ist gegenüber dem feststehenden Teil des Blattlagers beweglich, insbesondere drehbeweglich, um eine Verstellung des Rotorblatts, beispielsweise über Pitchmotoren, zu ermöglichen.

Die Verbindung zwischen Rotorblatt und Nabe über das Blattlager ist eine im Betrieb hoch beanspruchte und daher für die Sicherheit und Zuverlässigkeit aber auch für die Montage-und Servicefreundlichkeit sowie die Kosteneffizienz einer Windenergieanlage relevante Verbindung. Das hier beschriebene Rotorblatt sieht nun vor, dass an einer Außenumfangsfläche des nabenseitigen Endes des Rotorblatts eine Lagerabdeckung angeordnet ist. Die Lagerabdeckung weist einen lagernahen Abschnitt und einen lagerfernen Abschnitt auf. Im montierten Zustand des Rotorblatts an der Nabe befindet sich der lagernahe Abschnitt der Lagerabdeckung (insbesondere in axialer Richtung des Rotorblatts) näher am Blattlager als der lagerferne Abschnitt der Lagerabdeckung. Die Lagerabdeckung ist derart ausgebildet, dass der lagernahe Abschnitt von der Außenumfangsfläche des nabenseitigen Endes des Rotorblatts (insbesondere in radialer Richtung) um ein Vielfaches weiter entfernt ist als der lagerferne Abschnitt der Lagerabdeckung. Auf diese Weise entsteht am nabenseitigen Ende des Rotorblatts ein Zwischenraum zwischen der Lagerabdeckung und der Außenumfangsfläche des nabenseitigen Endes des Rotorblatts, welcher für die Anordnung weiterer Elemente, wie beispielsweise Befestigungen, genutzt werden kann.

Das Vorsehen einer Lagerabdeckung wie hier beschrieben hat verschiedene Vorteile. Beispielsweise schützt die Lagerabdeckung den durch sie abgedeckten Bereich der Verbindung, insbesondere des Blattlagers, vor Umwelteinflüssen und reduziert beispielsweise den Eintrag von Regen und/oder Schmutz. Dies kann insbesondere bei Windenergieanlagen von Vorteil sein, deren Rotor keinen Spinner aufweist.

Gemäß einer bevorzugten Ausführungsform ist vorgesehen, dass zwischen der Außenumfangsfläche des nabenseitigen Endes des Rotorblatts und dem lagernahen Abschnitt der Lagerabdeckung ein Zwischenraum gebildet ist zur Aufnahme eines Abschnitts eines feststehenden Teils des Blattlagers.

Die Aufnahme eines Abschnitts eines feststehenden Teils des Blattlagers im Zwischenraum zwischen dem lagernahen Abschnitt der Lagerabdeckung und der Außenumfangsfläche des nabenseitigen Endes des Rotorblatts ist besonders bevorzugt, da auf diese Weise der von der Lagerabdeckung abgedeckte Abschnitt des feststehenden Teils des Blattlagers entsprechend geschützt ist. Vorzugsweise ist in dem Zwischenraum auch ein Abschnitt des beweglichen Teils des Blattlagers angeordnet. Insbesondere der Abschnitt des feststehenden Teils des Blattlagers und/oder der Abschnitt des beweglichen Teils des Blattlagers, welche dem Rotorblatt zugewandt sind, sind vorzugsweise in dem Zwischenraum angeordnet. Insbesondere die Köpfe der Blattbefestigungsbolzen, welche in Richtung Rotorblatt weisen, sind vorzugsweise in dem Zwischenraum angeordnet. Der Zwischenraum ist vorzugsweise ringförmig angeordnet und erstreckt sich vorzugsweise am nabenseitigen Ende des Rotorblatts zwischen der Außenumfangsfläche des Rotorblatts und dem lagernahen Abschnitt der Lagerabdeckung.

Es ist ferner bevorzugt, dass das Rotorblatt an seinem nabenseitigen Ende eine Vielzahl von Blattsacklöchern zur Aufnahme von Blattbefestigungsbolzen zur Befestigung des Rotorblatts an einem beweglichen Teil eines Blattlagers einer Nabe eines Rotors einer Windenergieanlage aufweist.

Die Vielzahl von Blattsacklöchern zur Aufnahme von Blattbefestigungsbolzen ist vorzugsweise an der Stirnfläche des nabenseitigen Endes des Rotorblatts angeordnet. Ferner vorzugsweise sind die Blattsacklöchern ringförmig angeordnet und/oder in Umfangsrichtung voneinander beabstandet, vorzugsweise äquidistant.

In einer bevorzugten Ausführungsform ist vorgesehen, dass der lagerferne Abschnitt der Lagerabdeckung und der lagernahe Abschnitt der Lagerabdeckung im Wesentlichen parallel zueinander und/oder radial beabstandet voneinander angeordnet sind.

Eine bevorzugte Weiterbildung zeichnet sich dadurch aus, dass die Lagerabdeckung einen Zwischenabschnitt aufweist, der zwischen dem lagerfernen und dem lagernahen Abschnitt angeordnet ist. Ferner vorzugsweise ist der Zwischenabschnitt im Wesentlichen orthogonal zu dem lagerfernen Abschnitt und/oder dem lagernahen Abschnitt angeordnet. Der Zwischenabschnitt kann eine Haupterstreckungsrichtung aufweisen, die vorzugsweise in einer radial ausgerichteten Ebene liegt. Der Zwischenabschnitt kann eine Haupterstreckungsrichtung aufweisen, die vorzugsweise zu einer radial ausgerichteten Ebene leicht geneigt ist, vorzugsweise weniger als 60°, weniger als 45° oder weniger als 30°. Der Zwischenabschnitt kann beispielsweise im Wesentlichen ringscheibenförmig ausgebildet sein.

Gemäß einer bevorzugten Ausführungsform ist vorgesehen, dass der lagerferne Abschnitt und der lagernahe Abschnitt der Lagerabdeckung über den Zwischenabschnitt miteinander verbunden sind. Vorzugsweise ist ein Übergang vom lagerfernen Abschnitt zum Zwischenabschnitt gerundet ausgebildet. Ferner vorzugsweise ist ein Übergang vom lagernahen Abschnitt zum Zwischenabschnitt gerundet ausgebildet. Solche Rundungen können vorzugsweise einen Rundungsradius aufweisen. Vorzugsweise ist der Übergang vom lagerfernen Abschnitt zum Zwischenabschnitt in eine andere Richtung gerundet als der Übergang vom lagernahen Abschnitt zum Zwischenabschnitt. Der lagerferne Abschnitt und der lagernahe Abschnitt und der Zwischenabschnitt der Lagerabdeckung können vorzugsweise einstückig ausgebildet sein. Unter einer einstückigen Ausbildung wird insbesondere eine Ausbildung verstanden, bei der der lagerferne und der lagernahe Abschnitt und der Zwischenabschnitt der Lagerabdeckung aus einem einzigen Stück geformt sind und insbesondere nicht als separate Bauteile hergestellt werden, die anschließend zusammengefügt werden.

In einer weiteren bevorzugten Ausführungsform ist vorgesehen, dass die Lagerabdeckung ringförmig ausgebildet ist und/oder mehrere, vorzugsweise miteinander verbundene, Teilringsegmente aufweist. Die Teilringsegmente sind vorzugsweise lösbar miteinander verbunden bzw. verbindbar.

Diese Ausgestaltung hat verschiedene Vorteile. Teilringsegmente einer Lagerabdeckung sind einfacher und kostengünstiger zu transportieren und zu montieren als ein geschlossener Ring. Ferner ermöglicht es eine Ausbildung der Lagerabdeckung mit mehreren Teilringsegmenten nur jeweils ein Teilringsegment zu demontieren. Dies ist vorteilhaft beispielsweise für eine Wartung oder Reparatur der Lagerabdeckung oder eines oder mehrerer durch sie abgedeckten Elemente.

Eine weitere bevorzugte Fortbildung zeichnet sich dadurch aus, dass die Lagerabdeckung, insbesondere über ihren lagerfernen Abschnitt, an der Außenumfangsfläche des nabenseitigen Endes des Rotorblatts, vorzugsweise lösbar, befestigt ist.

Eine solche Befestigung an der Außenumfangsfläche des nabenseitigen Endes des Rotorblatts hat den Vorteil, dass die Lagerabdeckung unabhängig, insbesondere zeitlich unabhängig, von der Montage des Rotorblatts ist. Eine Befestigung der Lagerabdeckung an der Außenumfangsfläche des nabenseitigen Endes des Rotorblatts umfasst beispielsweise auch eine Befestigung, bei der Befestigungselemente in entsprechende Ausnehmungen im nabenseitigen Ende des Rotorblatts eingreifen und beispielsweise am lagerfernen Abschnitt der Lagerabdeckung befestigt werden, beispielsweise in entsprechenden Löchern der Lagerabdeckung und mit entsprechenden Kopfelementen der Befestigungselemente.

Das nabenseitige Ende des Rotorblatts weist vorzugsweise mindestens eine Durchgangsöffnung in radialer Richtung auf. Vorzugsweise können mehrere solcher radialen Durchgangsöffnungen vorgesehen sein, die vorzugsweise in Umfangsrichtung beabstandet, insbesondere äquidistant beabstandet, angeordnet sein können.

Solche Durchgangsöffnungen können dazu dienen, Befestigungselemente zur Befestigung der Lagerabdeckung aufzunehmen. Solche Durchgangsöffnungen können jedoch auch vorgesehen sein, um einen Zugang in den Zwischenraum zwischen der Außenumfangsfläche des nabenseitigen Endes des Rotorblatts und dem lagernahen Abschnitt der Lagerabdeckung zu schaffen. Durch die Durchgangsöffnungen ist dieser Zwischenraum vorzugsweise auch vom Inneren des nabenseitigen Endes des Rotorblatts zugänglich.

Vorzugsweise ist die Durchgangsöffnung ausgebildet, mindestens ein Funktionselement dort hindurch aufzunehmen. Ein solches Funktionselement kann beispielsweise eine Handhabungsvorrichtung und/oder eine Inspektionsvorrichtung sein. Eine Handhabungsvorrichtung kann beispielsweise einen Hebel, einen Greifer oder Ähnliches umfassen. Eine Inspektionsvorrichtung kann beispielsweise einen oder mehrere Sensoren und/oder daran angeschlossenen Leitungen umfassen. Die Sensoren können beispielsweise optische, thermische, akustische oder sonstige Sensoren sein. Eine Inspektionsvorrichtung kann beispielsweise eine Messvorrichtung, umfassend insbesondere ein Messelement und/oder eine Messleitung, umfassen.

Auf diese Weise ist es möglich, im Zwischenraum befindliche Elemente, wie beispielsweise eine Lagerverschraubung zur Befestigung des feststehenden Teils des Blattlagers, insbesondere Köpfe vom Blattbefestigungsbolzen, überprüfen zu können. Vorzugsweise kann hierfür die Lagerabdeckung ganz oder teilweise, insbesondere eines oder mehrere ihrer Teilringsegmente, zuvor demontiert werden. Die Durchgangsöffnung, die zu Inspektionszwecken genutzt wird, kann identisch sein mit einer Durchgangsöffnung, welche zur Befestigung der Lagerabdeckung dient. Die zu Inspektionszwecken genutzte Durchgangsöffnung kann aber auch eine zusätzliche, separat für die Inspektion vorgesehene Durchgangsöffnung sein.

Ferner ist vorzugsweise vorgesehen, dass im Bereich der Befestigung der Lagerabdeckung auf der Außenumfangsfläche des nabenseitigen Endes des Rotorblatts Ausgleichselemente, beispielsweise in Form von Scheiben, angeordnet sind.

Das Vorsehen von Ausgleichselementen dient insbesondere dazu, eventuelle Abweichungen der Außenumfangsfläche des nabenseitigen Endes des Rotorblatts von einer Kreislinie ausgleichen zu können. Die Ausgleichselemente können beispielsweise unterschiedliche Abmessungen, insbesondere in im Betriebszustand radialer Richtung, aufweisen, um unterschiedliche Abweichungen von einer Kreislinie ausgleichen zu können. Auf diese Weise kann die Lagerabdeckung, insbesondere deren lagerferner Abschnitt, ringförmig ausgebildet sein, ohne dass es zu Montage- oder Toleranzproblemen kommt, da über die Ausgleichselemente eventuelle Abweichungen von einer Kreislinie ausgeglichen werden können.

Ferner ist ein Dichtelement vorgesehen, das einen Spalt zwischen der Außenumfangsfläche des nabenseitigen Endes des Rotorblatts und dem lagerfernen Abschnitt der Lagerabdeckung zumindest teilweise abdichtet und/oder abdeckt.

Ein solches Dichtelement kann vorzugsweise einen Eintrag von beispielsweise Schmutz und Feuchtigkeit in den Spalt zwischen der Außenumfangsfläche des nabenseitigen Endes des Rotorblatts und dem lagerfernen Abschnitt der Lagerabdeckung und/oder in den Zwischenraum vorzugsweise reduzieren. Es kann auch eine flüssigkeitsdichte Abdichtung vorgesehen sein.

In einerweiteren bevorzugten Ausführungsform ist vorgesehen, dass der feststehende Teil des Blattlagers als Nasenring ausgebildet ist und der bewegliche Teil des Blattlagers als U-Ring, insbesondere als geteilter U-Ring, ausgebildet ist. Eine weitere bevorzugte Fortbildung zeichnet sich dadurch aus, dass der bewegliche Teil des Blattlagers als Nasenring ausgebildet ist und der feststehende Teil des Blattlagers als U-Ring, insbesondere als geteilter U-Ring, ausgebildet ist

Die beschriebene Lagerabdeckung eines Rotorblatts kann vorzugsweise zum Einsatz kommen unabhängig davon, ob der feststehende Teil des Blattlagers als Nasenring ausgebildet ist oder der bewegliche Teil des Blattlagers.

Gemäß einem weiteren Aspekt der Erfindung wird die eingangs genannte Aufgabe gelöst durch einen Rotor für eine Windenergieanlage umfassend eine Nabe mit einem Blattlager und einem am Blattlager befestigten Rotorblatt wie zuvor beschrieben.

In einer bevorzugten Ausführungsform des Rotors ist vorgesehen, dass die Nabe am lagernahen Ende einen radial nach innen kragenden Flansch aufweist, wobei der Flansch vorzugsweise ein sich in Umfangsrichtung erstreckendes Langloch aufweist als Zugang zu Blattbefestigungsbolzen, mit denen das Rotorblatt am beweglichen Teil des Lagers befestigt ist.

Ferner vorzugsweise weist die Nabe am lagernahen Ende eine Vielzahl von Nabensacklöchern zur Aufnahme von Lagerbefestigungsbolzen zur Befestigung eines feststehenden Teils eines Blattlagers an der Nabe auf.

Ferner vorzugsweise ist eine Arretierungsvorrichtung vorgesehen, mit welcher das Rotorblatt gegenüber der Nabe arretiert werden kann, insbesondere um eine Drehbewegung des Rotorblatts gegenüber der Nabe zu verhindern, was beispielsweise beim Austausch eines Pitchmotors oder der Reparatur eines solchen vorteilhaft ist. Die Arretierungsvorrichtung weist vorzugsweise einen Arretierzapfen auf.

Der Arretierzapfen, insbesondere ein Befestigungsende des Arretierzapfens, ist vorzugsweise ausgebildet, mit einem Blattbefestigungsbolzen, insbesondere dem Kopf eines Blattbefestigungsbolzens in Eingriff zu treten. Dieser Eingriff kann beispielsweise formschlüssig und/oder kraftschlüssig und/oder reibschlüssig sein. Der Eingriff kann beispielsweise als, vorzugsweise lösbare, Gewindeverbindung ausgebildet sein. Insbesondere ist der Eingriff vorzugsweise ausgebildet, eine radiale Relativbewegung zwischen dem Arretierzapfen und dem Blattbefestigungsbolzen zu verhindern. Der Arretierzapfen kann vorzugsweise an seinem Befestigungsende eine Ausnehmung, beispielsweise in Form eines Arretiersacklochs, aufweisen, welche vorzugsweise mit einem Gewinde versehen sein kann. Wenn der Blattbefestigungsbolzen als Gewindebolzen ausgebildet ist, ist das Gewinde in der Ausnehmung des Arretierzapfens vorzugsweise passend zum Gewinn des Blattbefestigungsbolzens ausgebildet, sodass diese miteinander in Eingriff kommen können.

Ferner ist der Arretierzapfen, insbesondere ein Langlochende des Arretierzapfens, vorzugsweise ausgebildet, mit dem Langloch in Eingriff treten. Dieser Eingriff kann beispielsweise formschlüssig und/oder kraftschlüssig und/oder reibschlüssig sein. Der Eingriff kann beispielsweise als, vorzugsweise lösbare, Gewindeverbindung ausgebildet sein. Dazu kann ein Langlocheinsatz vorgesehen sein. Der Arretierzapfen kann an seinem Langlochende vorzugsweise einen Stabvorsprung aufweisen, der mit einem Befestigungselement in Eingriff kommen kann.

Gemäß einem weiteren Aspekt der Erfindung wird die eingangs genannte Aufgabe gelöst durch eine Windenergieanlage mit einem zuvor beschriebenen Rotorblatt und/oder mit einem zuvor beschriebenen Rotor.

Gemäß einem weiteren Aspekt der Erfindung wird die eingangs genannte Aufgabe gelöst durch ein Verfahren zur Verbindung eines Rotorblatts an einer Nabe eines Rotors einer Windenergieanlage, umfassend: Bereitstellen eines zuvor beschriebenen Rotorblatts, Befestigen des nabenseitigen Endes des Rotorblatts an einem an der Nabe angeordneten Blattlager.

Eine bevorzugte Ausführungsform des Verfahrens ist gekennzeichnet durch Vorspannen, insbesondere hydraulisches Vorspannen, der Blattbefestigungsbolzen, Aufschrauben von Muttern auf die Blattbefestigungsbolzen, teilweises Entspannen der Blattbefestigungsbolzen, wobei das Vorspannen und/oder Aufschrauben und/oder Entspannen vorzugsweise durch ein sich in Umfangsrichtung erstreckendes Langloch eines radial nach innen kragenden Flansches an einem lagernahen Ende der Nabe hindurch erfolgt. Das Vorspannen kann vorzugsweise dadurch erfolgen, dass die Blattbefestigungsbolzen insbesondere durch die Langlöcher herausgezogen werden. Durch das teilweise Entspannen verbleibt eine Vorspannung in den Blattbefestigungsbolzen, die insbesondere durch den Entspannungsweg, der insbesondere durch die Position der aufgeschraubten Muttern vorgegeben ist, beeinflusst werden.

Diese weiteren Aspekte und ihre möglichen Fortbildungen weisen Merkmale bzw. Verfahrensschritte auf, die sie insbesondere dafür geeignet machen, für ein erfindungsgemäßes Rotorblatt und seine Fortbildungen verwendet zu werden. Zu den Vorteilen, Ausführungsvarianten und Ausführungsdetails dieser weiteren Aspekte der Erfindung und ihrer Fortbildungen wird auf die vorangegangene Beschreibung zu den entsprechenden Merkmalen der jeweils anderen Aspekte verwiesen.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine dreidimensionale geschnittene Darstellung Ausschnitts eines am Lager befestigten Rotorblatts;
- Figur 3:: eine weitere dreidimensionale geschnittene Darstellung Ausschnitts eines am Lager befestigten Rotorblatts;
- Figur 4:: eine weitere dreidimensionale geschnittene Darstellung eines Ausschnitts der Befestigung eines Rotorblatts an einer Nabe;
- Figur 5:: eine dreidimensionale Darstellung einer Lagerabdeckung mit einem entfernten Teilringsegment;
- Figur 6:: eine schematische Schnittdarstellung eines Teils eines nabenseitigen Endes des Rotorblatts;
- Figur 7:: eine schematische dreidimensionale geschnittene Darstellung eines Ausschnitts eines nabenseitigen Endes des Rotorblatts mit Blattlager;
- Figur 8:: eine weitere schematische dreidimensionale geschnittene Darstellung eines Ausschnitts eines nabenseitigen Endes des Rotorblatts mit Blattlager;
- Figur 9:: eine dreidimensionale geschnittene Darstellung einer Arretierungsvorrichtung zur Arretierung des Rotorblatts gegenüber der Nabe;
- Figur 10:: eine weitere dreidimensionale geschnittene Darstellung einer Arretierungsvorrichtung zur Arretierung des Rotorblatts gegenüber der Nabe;
- Figur 11:: eine dreidimensionale Darstellung des Befestigungselements des Arretierzapfens und des Langlocheinsatzes;
- Figur 12:: eine weitere schematische geschnittene Darstellung eines Ausschnitts eines nabenseitigen Endes des Rotorblatts mit Blattlager;
- Figur 13:: eine weitere schematische dreidimensionale Darstellung eines Ausschnitts eines nabenseitigen Endes des Rotorblatts mit Blattlager; und
- Figur 14:: eine schematische Darstellung eines Verfahrens zur Verbindung eines Rotorblatts an einer Nabe eines Rotors einer Windenergieanlage.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

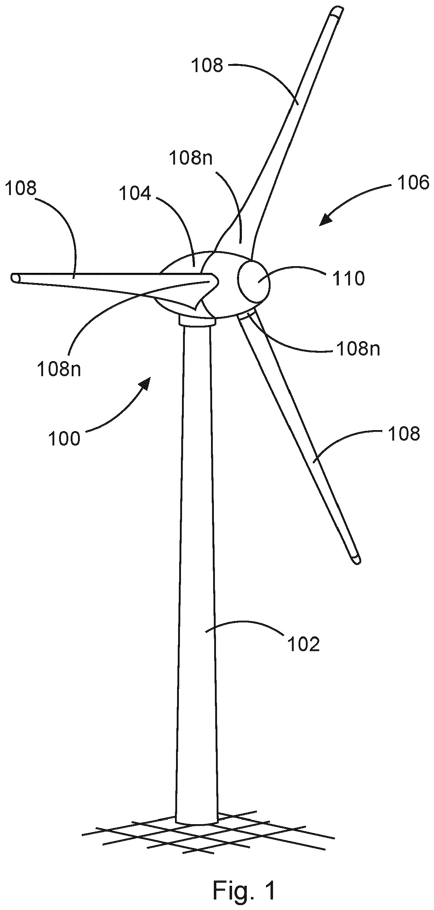

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108und einer Nabe 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

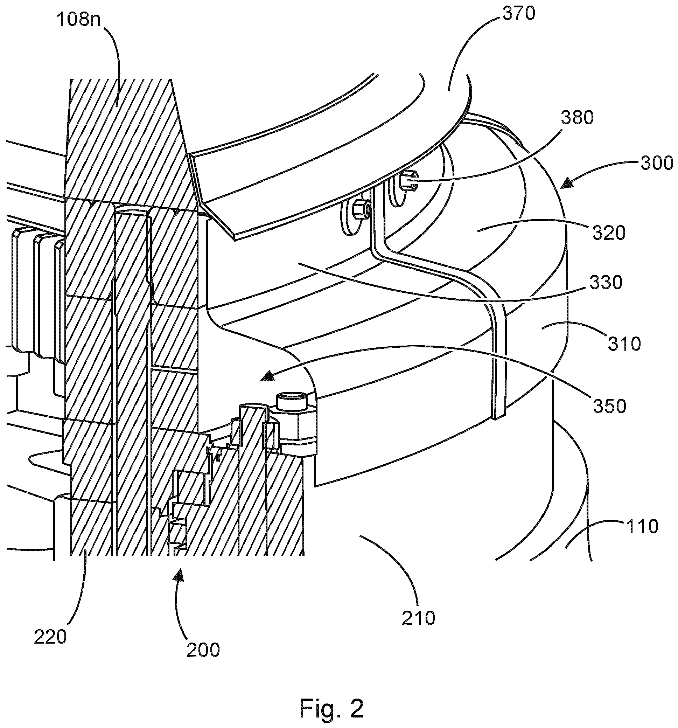

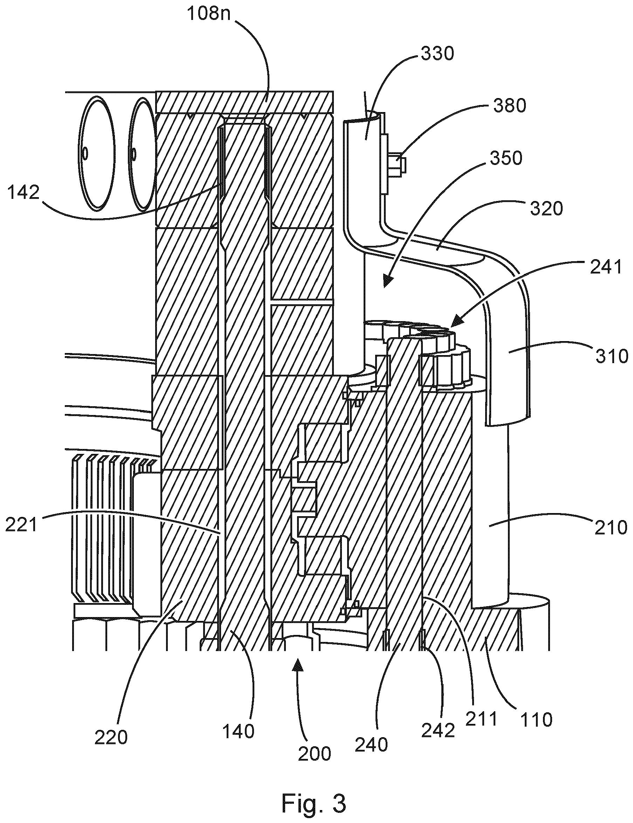

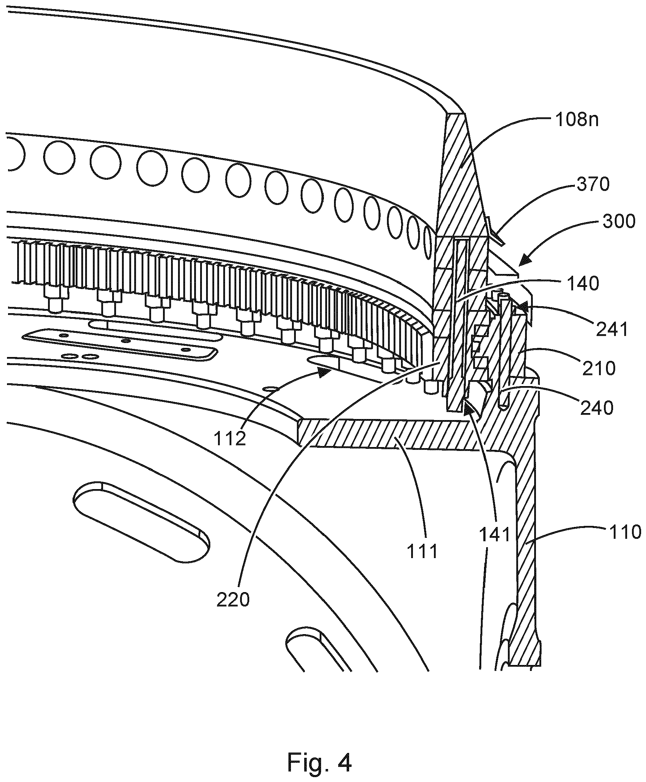

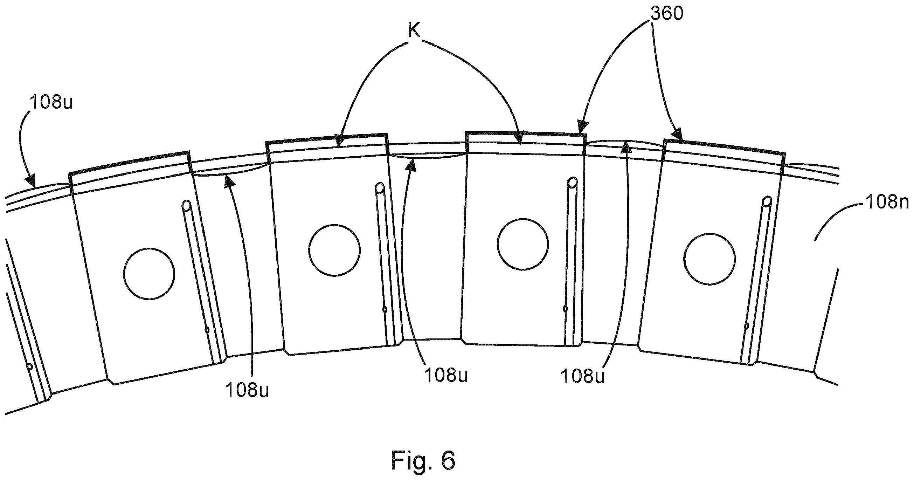

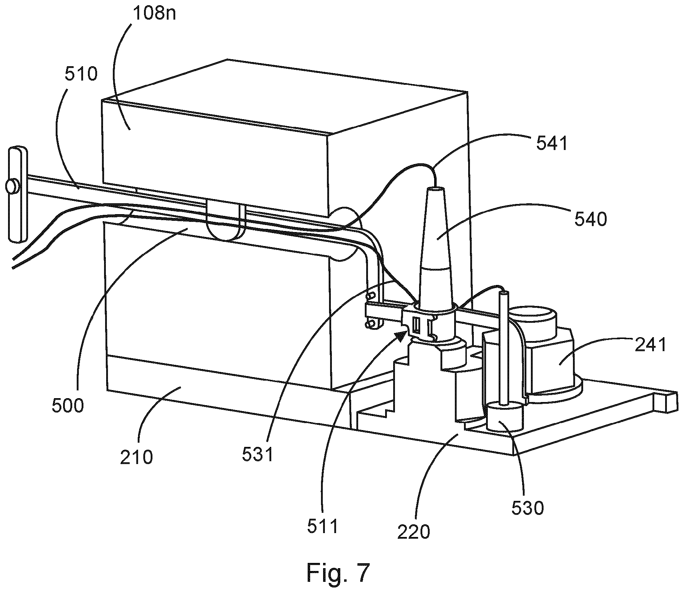

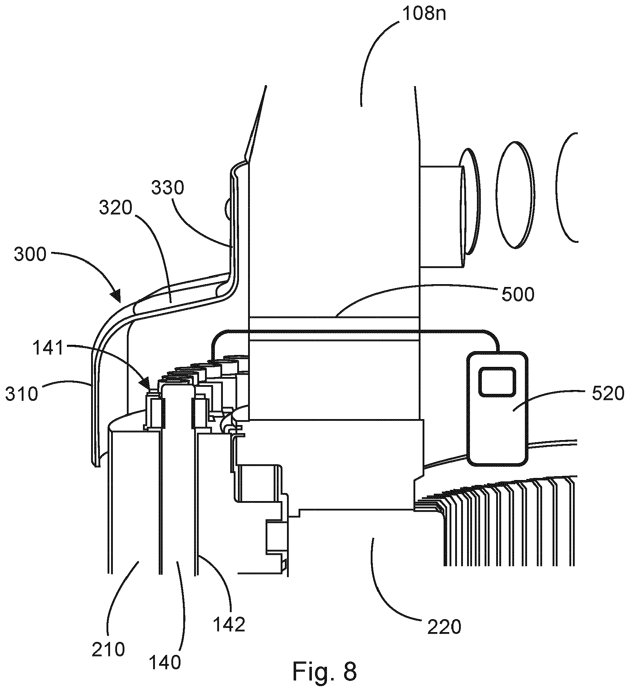

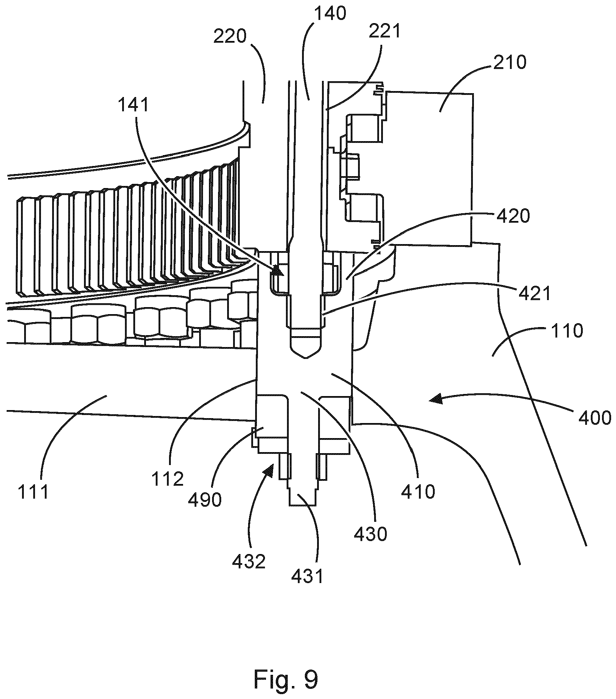

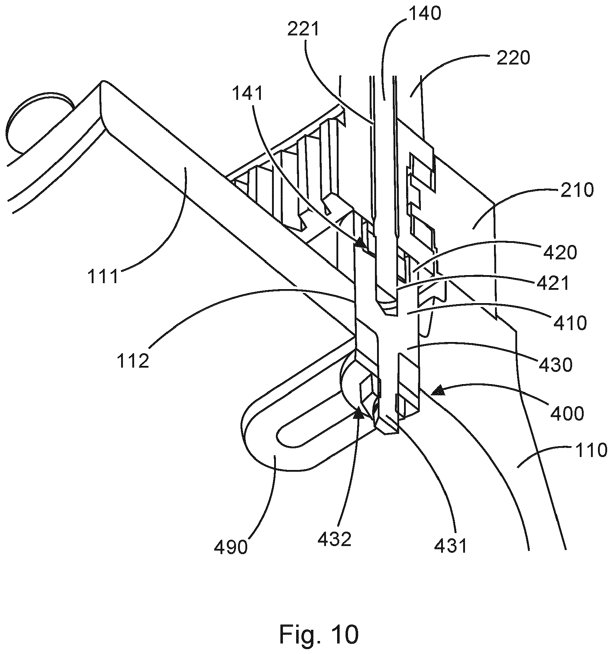

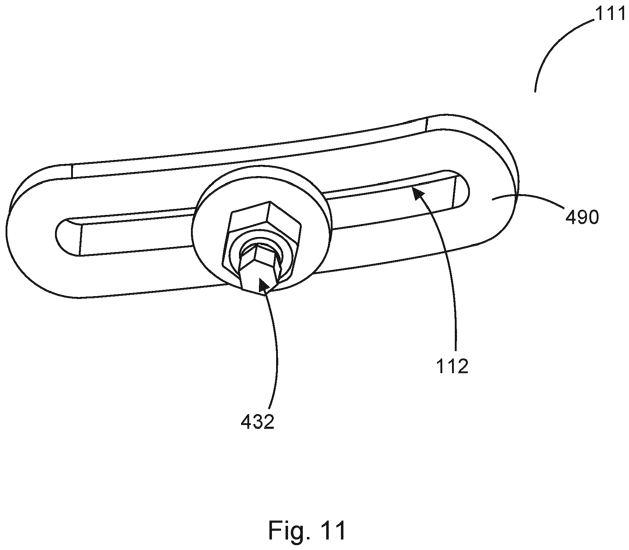

Die Rotorblätter 108 werden an der Nabe 110 über ein Blattlager 200 befestigt. Eine Lagerabdeckung 300 schützt diesen Bereich vor Umwelteinflüssen. Details der Befestigung des Rotorblatts 108 an der Nabe 110 sowie des Blattlagers 200 und der Lagerabdeckung 300 werden im Folgenden insbesondere mit Bezug auf die Figuren 2 bis 6 und 12 näher beschrieben. In den Figuren 7 und 8 sind weitere Details einer Möglichkeit zur Inspektion des Lagers dargestellt. In den Figuren 9 bis 11 sind Details einer Arretierungsvorrichtung 400 zur Arretierung des Rotorblatts 108 gegenüber der Nabe 110 dargestellt.

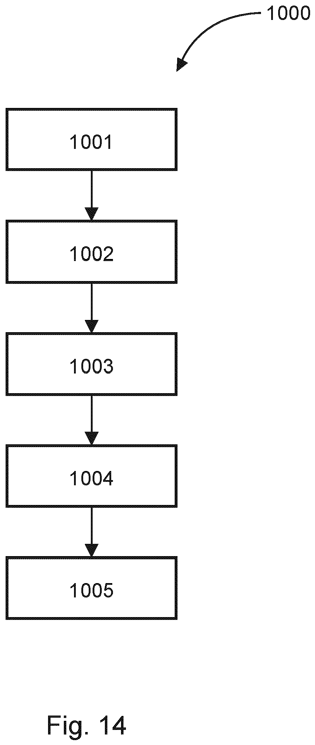

Figur 14 schließlich zeigt schematisch die Schritte eines Verfahrens 1000 zur Verbindung eines Rotorblatts 108 an einer Nabe 110 eines Rotors 106 einer Windenergieanlage 100.

Ein Rotorblatt 108 wird mit seinem nabenseitigen Ende 108n an der Nabe 110 eines Rotors 106 einer Windenergieanlage 100 befestigt. Die hier beschriebene Rotorblattbefestigung kann gleichermaßen angewendet werden für Naben, die zur Befestigung des Rotorblatts 108nabenadapter aufweisen.

Die Befestigung des Rotorblatts 108 an der Nabe 110 erfolgt über ein Blattlager 200. Das Blattlager 200 umfasst einen feststehenden Teil 210 und einen beweglichen Teil 220. Der feststehende Teil 210 des Blattlagers 200 wird an der Nabe 110 mittels einer Vielzahl von Lagerbefestigungsbolzen 240 befestigt. Diese Lagerbefestigungsbolzen 240 greifen durch entsprechende Durchgangslöcher 211 im feststehenden Teil 210 des Blattlagers 200 und Enden in entsprechenden Nabensacklöcher 242 der Nabe 110. Wie im weiteren noch näher beschrieben wird, ragen die Köpfe 241 der Lagerbefestigungsbolzen 240 in den Zwischenraum 350 der Lagerabdeckung 300 und sind so vor Umwelteinflüssen geschützt.

Das nabenseitige Ende 108n des Rotorblatts 108 ist am beweglichen Teil 220 des Blattlagers 200 mittels einer Vielzahl von Blattbefestigungsbolzen 140 befestigt. Die Blattbefestigungsbolzen 140 durchdringen entsprechende Durchgangslöcher 221 im beweglichen Teil 220 des Blattlagers 200 und enden in entsprechenden Blattsacklöchern 142 im Rotorblatt 108. Die Köpfe 141 der Blattbefestigungsbolzen 140 sind über Langlöcher 112 im radial auskragenden Flansch 111 der Nabe 110 zugänglich.

Vorzugsweise werden zum Vorspannen die Blattbefestigungsbolzen 140 hydraulisch ein Stück aus den Durchgangslöchern 221 im beweglichen Teil 220 des Blattlagers 200 herausgezogen und dann die Muttern der Köpfe 141 der Blattbefestigungsbolzen 140 aufgeschraubt. Dann wird die hydraulische Spannung gelöst, wodurch sich eine fest verspannte Blattbefestigung ergibt. Auf diese Weise kann vorzugsweise auch auf eine Drehmomentbegrenzung beim Aufbringen der Muttern an den Köpfen 141 der Blattbefestigungsbolzen 140 verzichtet werden.

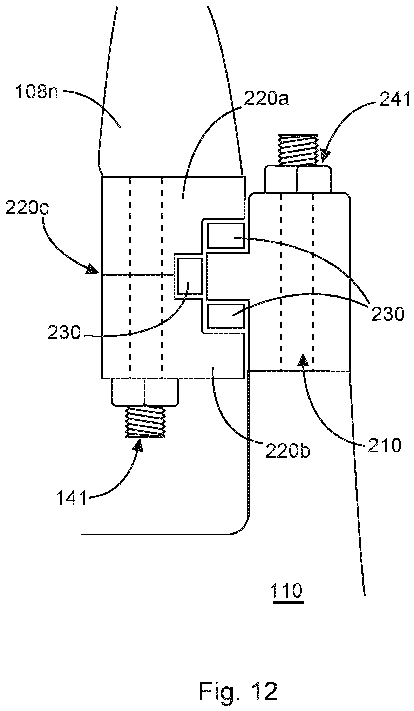

Figur 12 zeigt den beweglichen Teil 220 des Blattlagers als geteilten Innenring mit einem oberen Teil 220a und einem unteren Teil 220b und der Teilung 220c. Auch die Wälzkörper 230, hier in Form von Rollen, sind in Figur 12 erkennbar.

In den hier dargestellten Beispielen ist der feststehende Teil 210 des Blattlagers 200 als sogenannter Nasenring ausgebildet und der bewegliche Teil 220 des Blattlagers 200 ist als geteilter U-Ring ausgebildet. Auch eine umgekehrte Ausbildung, bei der der feststehende Teil 210 des Blattlagers 200 als geteilter U-Ring und der bewegliche Teil 220 des Blattlagers 200 als Nasenring ausgebildet ist, ist möglich.

An einer Außenumfangsfläche 108 des nabenseitigen Endes 108n des Rotorblatts 108 ist eine Lagerabdeckung 300 angeordnet.

Die Lagerabdeckung 300 dient insbesondere dazu, den durch sie abgedeckten Bereich der Verbindung zwischen Rotorblatt 108und Nabe 110 zu schützen, beispielsweise vor Umwelteinflüssen und etwa den Eintrag von Regen und/oder Schmutz zu reduzieren. Dies ist insbesondere bei Windenergieanlagen 100 von Vorteil, deren Rotor 106 keinen Spinner aufweist.

Um die Schutzwirkung noch zu erhöhen, ist ein Dichtelement 370 vorgesehen, welches einen Spalt zwischen der Außenumfangsfläche 108u des nabenseitigen Endes 108n des Rotorblatts 108 und dem lagerfernen Abschnitt 330 der Lagerabdeckung 300 zumindest teilweise abdichtet und/oder abdeckt. Hierdurch kann der Eintrag beispielsweise von Schmutz und Feuchtigkeit in den Spalt reduziert werden. Es kann auch eine flüssigkeitsdichte, d.h. nicht nur den Eintrag von Flüssigkeit reduzierende, Abdichtung vorgesehen sein.

Die Lagerabdeckung 300 umfasst einen lagernahen Abschnitt 310 und einen lagerfernen Abschnitt 330. Der lagernahe Abschnitt 310 ist von der Außenumfangsfläche 108u des nabenseitigen Endes 108n des Rotorblatts 108um ein Vielfaches weiter entfernt als der lagerferne Abschnitt 330. Zwischen der Außenumfangsfläche 108u des nabenseitigen Endes 108n des Rotorblatts 108und dem lagernahen Abschnitt 310 der Lagerabdeckung 300 ist ein Zwischenraum 350 gebildet. Diese dient insbesondere zur Aufnahme eines Abschnitts eines feststehenden Teils 210 des Blattlagers 220, besondere zur Aufnahme der Köpfe 241 der Lagerbefestigungsbolzen 240. Insbesondere ist es bevorzugt, dass die Lagerabdeckung 300, insbesondere deren Zwischenraum 350, angeordnet und ausgebildet ist zur Aufnahme der Köpfe 241 der Lagerbefestigungsbolzen 240.

Der lagerferne Abschnitt 330 und der lagernahe Abschnitt 310 der Lagerabdeckung sind vorzugsweise im Wesentlichen parallel zueinander und/oder radial beabstandet voneinander angeordnet. Vorzugsweise erstrecken sich der lagerferne Abschnitt 330 und der lagernahe Abschnitt 310 der Lagerabdeckung 300 im Wesentlichen in Richtung der Längsachse des Rotorblatts.

Ferner ist bevorzugt, dass die Lagerabdeckung 300 einen Zwischenabschnitt 320 aufweist, der zwischen dem lagerfernen Abschnitt 330 und dem lagernahen Abschnitt 310 angeordnet ist. Der Zwischenabschnitt 320 weist im hier gezeigten Beispiel eine Haupterstreckungsrichtung auf, die zu einer radial ausgerichteten Ebene leicht geneigt ist. Der Zwischenabschnitt 320 ist ferner ringscheibenförmig ausgebildet. Der Zwischenabschnitt 320 verbindet den lagerfernen Abschnitt 330 mit dem lagernahen

Abschnitt 320 die Übergänge vom lagerfernen Abschnitt 330 zum Zwischenabschnitt 320 und vom lagernahen Abschnitt 310 zum Zwischenabschnitt 320 sind gerundet ausgebildet. Der Übergang vom lagerfernen Abschnitt 330 zum Zwischenabschnitt 320 ist in eine andere Richtung gerundet als der Übergang vom lagernahen Abschnitt 310 zum Zwischenabschnitt 320.

Der lagerferne Abschnitt 330, der lagernahe Abschnitt 310 und der Zwischenabschnitt 320 sind einstückig ausgebildet und aus einem einzigen Stück geformt.

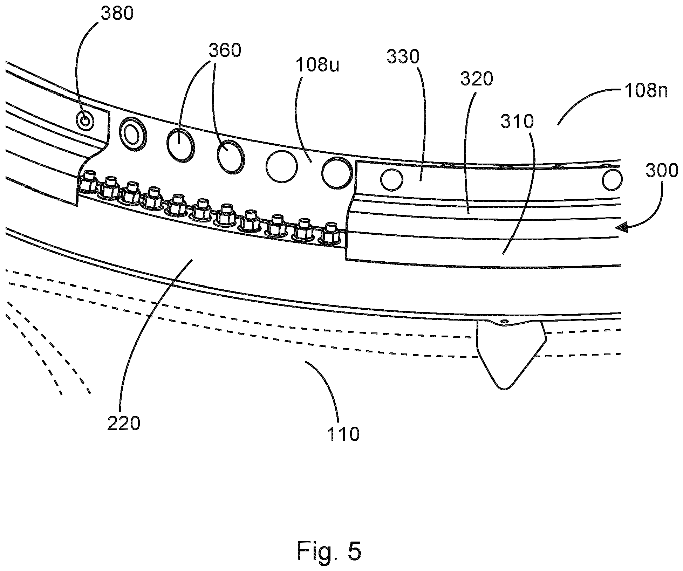

Wie insbesondere in Figur 5 zu erkennen ist, weist die Lagerabdeckung 300 mehrere Teilringsegmente auf. Die insgesamt ringförmig ausgebildet Lagerabdeckung 300 wird somit vorzugsweise durch mehrere Teilringsegmente gebildet. Die einzelnen Teilringsegmente sind vorzugsweise miteinander lösbar verbunden. Diese Verbindungen können Steck-, Überlappungsverbindungen oder andere Verbindungen sein. Die einstückige Ausbildung von lagerfernem Abschnitt 330, lagernahem Abschnitt 310 und Zwischenabschnitt 320 bezieht sich somit insbesondere auf die Ausbildung eines jeweiligen Teilringsegments.

Die Lagerabdeckung 300 ist insbesondere über ihren lagerfernen Abschnitt 330 an der Außenumfangsfläche 108u des nabenseitigen Endes 108n des Rotorblatts 108 lösbar befestigt, insbesondere mittels von Befestigungselementen 380, welche beispielsweise durch radiale Durchgangsöffnung im nabenseitigen Ende 108n des Rotorblatts 108und entsprechende Ausnehmungen im lagerfernen Abschnitt 330 der Lagerabdeckung 300 durchgeführt sein können.

Im Bereich der Befestigung der Lagerabdeckung 300 auf der Außenumfangsfläche 108u des nabenseitigen Endes 108n des Rotorblatts 108 können an den Enden 360 der Querbolzen vorzugsweise Ausgleichselemente, beispielsweise in Form von Scheiben, angeordnet sein. Mittels solcher Ausgleichselemente können insbesondere eventuelle Abweichungen der Außenumfangsfläche 108u des nabenseitigen Endes 108n des Rotorblatts 108 von einer Kreislinie K ausgeglichen werden. Hierzu können die Ausgleichselemente vorzugsweise unterschiedliche Abmessungen, beispielsweise unterschiedliche Scheiben ticken, aufweisen um unterschiedliche Abweichungen, beispielsweise nach innen oder außen, von der Kreislinie K ausgleichen zu können. Somit kann die Lagerabdeckung 300, insbesondere deren lagerferner Abschnitt 330, ringförmig ausgebildet sein und eventuelle Abweichungen in der Außenumfangsfläche 108u des nabenseitigen Endes 108n des Rotorblatts 108 können über die Ausgleichselemente ausgeglichen werden, wodurch Montage- und Toleranzproblemen vermieden oder reduziert werden können.

Wie insbesondere in den Figuren 7 und 8 zu erkennen ist, können am nabenseitigen Ende 108n des Rotorblatts 108 radiale Durchgangsöffnungen 500 vorgesehen sein. Diese Durchgangsöffnungen 500 können einerseits dazu dienen, die Befestigungselemente 380 der Lagerabdeckung 300 aufzunehmen. Insbesondere können solche Durchgangsöffnungen 500 jedoch auch vorgesehen sein, um den Zugang in den Zwischenraum 350 vom Inneren des nabenseitigen Endes 108n des Rotorblatts 108 aus zu ermöglichen. Dieser Zugang in den Zwischenraum 350 und insbesondere in die in diesem Zwischenraum ragenden Köpfe 241 der Lagerbefestigungsbolzen 240 ist zu Inspektion-, Wartungs-oder Reparaturzwecken vorteilhaft. Eine Durchgangsöffnung 500 ist daher vorzugsweise ausgebildet, um mindestens ein Funktionselement dort hindurch aufzunehmen, insbesondere beispielsweise eine Handhabungsvorrichtung 510 mit einem Greifer 511 und/oder eine Inspektionsvorrichtung 520, die beispielsweise einen Temperatursensor 530 mit einer entsprechenden Leitung 531 und/oder einen Messkopf 540 mit ebenfalls einer entsprechenden Leitung 541 umfassen kann. Auch weitere oder andere Sensoren können vorgesehen sein. Auf diese Weise kann mittels der radialen Durchgangsöffnungen 500 der Zwischenraum 350 zugänglich gemacht werden, um dort befindliche Elemente überprüfen zu können. Vorzugsweise kann hierfür die Lagerabdeckung 300 ganz oder teilweise zuvor demontiert werden. Insbesondere kann hierzu beispielsweise ein Teilringsegment demontiert werden, wie in Figur 5 gezeigt.

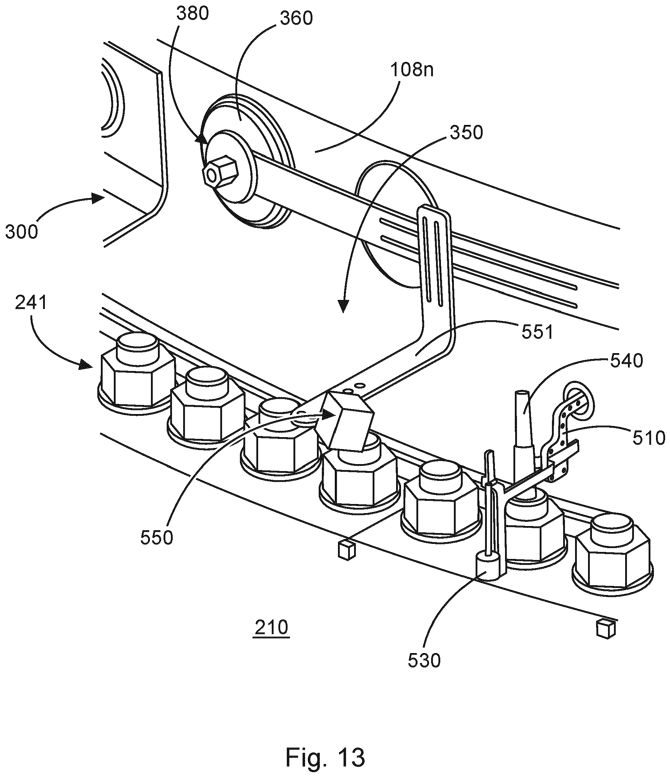

Wie in Figur 13 zu erkennen ist, kann es bevorzugt sein, im Zwischenraum 350 oder bei ganz oder teilweise demontierter Lagerabdeckung 300 eine Kamera 500 anzuordnen, mit der beispielsweise die Handhabungsvorrichtung 510 und/oder der Greifer 511 und/oder die Inspektionsvorrichtung 520 bildlich erfasst werden können. Dies kann beispielsweise die Steuerung und/oder Überwachung der Handhabungsvorrichtung 510 und/oder des Greifers 511 und/oder der Inspektionsvorrichtung 520 erleichtern.

Ein weiterer Vorteil der Ausbildung der Lagerabdeckung 300 in mehreren Teilringsegmenten ist es, dass die Teilringsegmente auch einfacher und kostengünstiger zu transportieren und zu montieren sind als ein geschlossener Ring.

Wie insbesondere in den Figuren 9 bis 11 dargestellt, ist eine, vorzugsweise lösbare bzw. temporäre anbringbare, Arretierungsvorrichtung 400 vorgesehen, mit der das Rotorblatt 108 gegenüber der Nabe 110 arretiert werden kann. Dies kann beispielsweise erforderlich sein, um eine Drehbewegung des Rotorblatts 108 gegenüber der Nabe 110 zu verhindern, beispielsweise zum Austausch oder zur Reparatur eines Pitchmotors. Die Arretierungsvorrichtung 400 weist einen Arretierzapfen 410 auf, an dessen Befestigungsende 420 eine Ausnehmung 421 vorgesehen ist. Hiermit kann der Arretierzapfen 410 mit dem Kopf 141 eines Blattbefestigungsbolzen 140 in Eingriff treten, beispielsweise über eine Gewindeverbindung.

An einem Langlochende 430 des Arretierzapfens 410 ist ein Stabvorsprung 431 vorgesehen, auf den ein Befestigungselement 432 aufgebracht werden kann. Zur Befestigung des Stabvorsprungs 431 im Langloch 112 des Flansches 111 der Nabe 110 ist ein Langlocheinsatz 490 vorgesehen, durch den der Stabvorsprung 431 des Arretierzapfens 410 durchragen kann und dann mit dem Befestigungselement 432 befestigt werden kann. Auch dieser Eingriff kann beispielsweise als lösbare Gewindeverbindung ausgebildet sein.

Die Arretierungsvorrichtung 400 ermöglicht es somit, das Rotorblatt 108 gegenüber der Nabe 110 zu arretieren. Hierdurch können insbesondere Drehbewegungen des Rotorblatts 108 gegenüber der Nabe 110 verhindert werden. Gegebenenfalls kann zusätzlich auch eine axiale Bewegung des Rotorblatts 108 gegenüber der Nabe 110 verhindert werden.

Das in Figur 14 dargestellte Verfahren 1000 zur Verbindung eines Rotorblatts 108 der Nabe 110 eines Rotors 106 einer Windenergieanlage 100 beginnt mit dem Bereitstellen 1001 eines entsprechenden Rotorblatts 108und dann dem Befestigen 1002 des nabenseitigen Endes 108n des Rotorblatts 108 an einem an der Nabe 110 angeordneten Blattlager 200. Vorzugsweise erfolgt hierbei ein Vorspannen 1003, insbesondere hydraulisches Vorspannen, der Blattbefestigungsbolzen 140, durch das Langloch 112 am Flansch 111 der Nabe 110, gefolgt vom Aufschrauben 1004 von Muttern auf die Köpfe 141 der Blattbefestigungsbolzen 140 und ein anschließendes teilweises Entspannen 1005 der Blattbefestigungsbolzen 140.

Insgesamt wird mit der hier beschriebenen Lösung eine einfache und kostengünstige Lösung für die Verbindung eines Rotorblatts an der Nabe bereitgestellt, welche durch die vorgesehene Lagerabdeckung eine sichere und zuverlässige Verbindung sicherstellt und gleichzeitig montage- und servicefreundlich ist.

### Bezuqszeichenliste

- 100: Windenergieanlage,
- 106: Rotor
- 108: Rotorblatt
- 108n: nabenseitiges Ende des Rotorblatts
- 108u: Außenumfangsfläche des nabenseitigen Endes des Rotorblatts
- 110: Nabe
- 111: Flansch
- 112: Langloch
- 140: Blattbefestigungsbolzen
- 141: Kopf des Blattbefestigungsbolzens
- 142: Blattsackloch
- 200: Blattlager
- 210: feststehender Teil des Blattlagers (Außenring)
- 211: Durchgangsloch im feststehenden Teil des Blattlagers
- 220: beweglicher Teil des Blattlagers (Innenring)
- 220a: oberer Teil eines geteilten beweglichen Teils des Blattlagers
- 220b: unterer Teil eines geteilten beweglichen Teils des Blattlagers
- 220c: Teilung eines geteilten beweglichen Teils des Blattlagers
- 221: Durchgangsloch im beweglichen Teil des Blattlagers
- 230: Wälzkörper
- 240: Lagerbefestigungsbolzen
- 241: Kopf des Lagerbefestigungsbolzens
- 242: Nabensackloch
- 300: Lagerabdeckung
- 310: lagernaher Abschnitt der Lagerabdeckung
- 320: Zwischenabschnitt der Lagerabdeckung
- 330: lagerferner Abschnitt der Lagerabdeckung
- 350: Zwischenraum
- 360: Enden der Querbolzen
- 370: Dichtelement
- 380: Befestigungselement der Lagerabdeckung
- 400: Arretierungsvorrichtung
- 410: Arretierzapfen
- 420: Befestigungsende des Arretierzapfens
- 421: Ausnehmung am Befestigungsende des Arretierzapfens
- 430: Langlochende des Arretierzapfens
- 431: Stabvorsprung am Langlochende des Arretierzapfens
- 432: Befestigungselement für Stabvorsprung am Langlochende des Arretierzapfens
- 490: Langlocheinsatz
- 500: radiale Durchgangsöffnung im nabenseitigen Ende des Rotorblatts
- 510: Handhabungsvorrichtung
- 511: Greifer der Handhabungsvorrichtung
- 520: Inspektionsvorrichtung
- 530: Temperatursensor
- 531: Leitung Temperatursensor
- 540: Messkopf
- 541: Leitung Messkopf
- 550: Kamera
- 551: Halterung
- 1000: Verfahren zur Verbindung eines Rotorblatts an einer Nabe eines Rotors einer Windenergieanlage
- 1001: Bereitstellen eines Rotorblatts nach mindestens einem der vorhergehenden Ansprüche,
- 1002: Befestigen des nabenseitigen Endes des Rotorblatts an einem an der Nabe angeordneten Blattlager
- 1003: Vorspannen, insbesondere hydraulisches Vorspannen, der Befestigungsbolzen zur Befestigung des Rotorblatts an einem beweglichen Teil eines Blattlagers
- 1004: Aufschrauben von Muttern auf die Befestigungsbolzen
- 1005: Entspannen der Befestigungsbolzen
- K p: Kreislinie

## Patentansprüche

1. Rotorblatt (108) für einen Rotor (106) einer Windenergieanlage (100),
das Rotorblatt (108) umfassend ein nabenseitiges Ende (108n) zur Befestigung des Rotorblatts (108) an einem beweglichen Teil (220) eines Blattlagers (200),
wobei an einer Außenumfangsfläche (108u) des nabenseitigen Endes des Rotorblatts (108) eine Lagerabdeckung (300) angeordnet ist,
wobei ein lagernaher Abschnitt (310) der Lagerabdeckung (300) von der Außenumfangsfläche des nabenseitigen Endes des Rotorblatts (108) um ein Vielfaches weiter entfernt ist als ein lagerferner Abschnitt (330) der Lagerabdeckung (300),
**dadurch gekennzeichnet, dass** ein Dichtelement (370) vorgesehen ist, das einen Spalt zwischen der Außenumfangsfläche (108u) des nabenseitigen Endes des Rotorblatts (108) und dem lagerfernen Abschnitt (330) der Lagerabdeckung (300) zumindest teilweise abdichtet und/oder abdeckt.

2. Rotorblatt (108) nach dem vorhergehenden Anspruch,
**dadurch gekennzeichnet, dass** zwischen der Außenumfangsfläche (108u) des nabenseitigen Endes des Rotorblatts (108) und dem lagernahen Abschnitt (310) der Lagerabdeckung (300) ein Zwischenraum (350) gebildet ist zur Aufnahme eines Abschnitts eines feststehenden Teils (210) des Blattlagers (200).

3. Rotorblatt (108) nach mindestens einem der vorhergehenden Ansprüche, **dadurch gekennzeichnet, dass** das Rotorblatt (108) an seinem nabenseitigen Ende eine Vielzahl von Blattsacklöchern zur Aufnahme von Blattbefestigungsbolzen (14) zur Befestigung des Rotorblatts (108) an einem beweglichen Teil eines Blattlagers (200) einer Nabe (110) eines Rotors (106) einer Windenergieanlage (100) aufweist.

4. Rotorblatt (108) nach mindestens einem der vorhergehenden Ansprüche, **dadurch gekennzeichnet, dass** der lagerferne Abschnitt der Lagerabdeckung (300) und der lagernahe Abschnitt (310) der Lagerabdeckung (300) im Wesentlichen parallel zueinander und/oder radial beabstandet voneinander angeordnet sind, und/oder
**dadurch gekennzeichnet, dass** die Lagerabdeckung (300) einen Zwischenabschnitt (320) aufweist, der zwischen dem lagerfernen Abschnitt (330) und dem lagernahen Abschnitt (310) angeordnet ist und vorzugsweise im Wesentlichen orthogonal zu dem lagerfernen Abschnitt (330) und/oder dem lagernahen Abschnitt (310) angeordnet ist.

5. Rotorblatt (108) nach mindestens einem der vorhergehenden Ansprüche, **dadurch gekennzeichnet, dass** der lagerferne Abschnitt und der lagernahe Abschnitt der Lagerabdeckung (300) über den Zwischenabschnitt (320) miteinander verbunden sind, wobei vorzugsweise ein Übergang vom lagerfernen Abschnitt zum Zwischenabschnitt (320) und/oder ein Übergang vom lagernahen Abschnitt (310) zum Zwischenabschnitt (320) gerundet ausgebildet ist, und/oder
**dadurch gekennzeichnet, dass** die Lagerabdeckung (300) ringförmig ausgebildet ist und/oder mehrere, vorzugsweise miteinander verbundene, Teilringsegmente aufweist, und/oder
**dadurch gekennzeichnet, dass** die Lagerabdeckung (300), insbesondere über ihren lagerfernen Abschnitt, an der Außenumfangsfläche (108u) des nabenseitigen Endes des Rotorblatts (108), vorzugsweise lösbar, befestigt ist, und/oder
**dadurch gekennzeichnet, dass** im Bereich der Befestigung der Lagerabdeckung (300) auf der Außenumfangsfläche (108u) des nabenseitigen Endes des Rotorblatts (108) Ausgleichselemente, beispielsweise in Form von Scheiben, angeordnet sind.

6. Rotorblatt (108) nach mindestens einem der vorhergehenden Ansprüche, **dadurch gekennzeichnet, dass** der feststehende Teil (210) des Blattlagers (200) als Nasenring ausgebildet ist und der bewegliche Teil (220) des Blattlagers (200) als U-Ring, insbesondere als geteilter U-Ring, ausgebildet ist, oder
**dadurch gekennzeichnet, dass** der bewegliche Teil (220) des Blattlagers (200) als Nasenring ausgebildet ist und der feststehende Teil (210) des Blattlagers (200) als U-Ring, insbesondere als geteilter U-Ring, ausgebildet ist.

7. Rotorblatt (108) nach mindestens einem der vorhergehenden Ansprüche, **dadurch gekennzeichnet, dass** das nabenseitige Ende des Rotorblatts (108) mindestens eine Durchgangsöffnung (500) in radialer Richtung aufweist, wobei die Durchgangsöffnung (500) vorzugsweise ausgebildet ist, um einen Zugang in den Zwischenraum (350) zwischen der Außenumfangsfläche (108u) des nabenseitigen Endes des Rotorblatts (108) und dem lagernahen Abschnitt (310) der Lagerabdeckung (300) zu schaffen, vorzugsweise zu Inspektions-, Wartungs-oder Reparaturzwecken, und/oder um mindestens ein Funktionselement, insbesondere eine Handhabungsvorrichtung und/oder eine Inspektionsvorrichtung, durch die Durchgangsöffnung (500) hindurch aufzunehmen.

8. Rotor (106) für eine Windenergieanlage (100) umfassend eine Nabe (110) mit einem Blattlager (200) und einem am Blattlager (200) befestigten Rotorblatt (108) nach mindestens einem der vorhergehenden Ansprüche.

9. Rotor (106) nach dem vorhergehenden Anspruch,
**dadurch gekennzeichnet, dass** die Nabe (110) am lagernahen Ende einen radial nach innen kragenden Flansch (111) aufweist, wobei der Flansch (111) vorzugsweise ein sich in Umfangsrichtung erstreckendes Langloch (112) aufweist als Zugang zu Blattbefestigungsbolzen, mit denen das Rotorblatt (108) am beweglichen Teil des Lagers befestigt ist, und/oder
**dadurch gekennzeichnet, dass** die Nabe (110) am lagernahen Ende eine Vielzahl von Nabensacklöchern (242) zur Aufnahme von Lagerbefestigungsbolzen (240) zur Befestigung eines feststehenden Teils (210) eines Blattlagers (200) an der Nabe (110) aufweist.

10. Rotor (106) nach mindestens einem der beiden vorhergehenden Ansprüche, **gekennzeichnet durch** eine Arretierungsvorrichtung (400), mit welcher das Rotorblatt (108) gegenüber der Nabe (110) arretierbar ist, insbesondere um eine Drehbewegung des Rotorblatts (108) gegenüber der Nabe (110) zu verhindern, wobei die Arretierungsvorrichtung (400) vorzugsweise einen Arretierzapfen (410) aufweist, der vorzugsweise ausgebildet ist, um mit einem Blattbefestigungsbolzen (140), insbesondere dem Kopf (141) eines Blattbefestigungsbolzens (140), in Eingriff zu treten.

11. Windenergieanlage (100) mit einem Rotorblatt (108) nach mindestens einem der vorhergehenden Ansprüche 1-7 und/oder mit einem Rotor (106) nach mindestens einem der vorhergehenden Ansprüche 8-10.

12. Verfahren (1000) zur Verbindung eines Rotorblatts (108) an einer Nabe (110) eines Rotors einer Windenergieanlage (100),
umfassend:
- Bereitstellen (1001) eines Rotorblatts (108) nach mindestens einem der vorhergehenden Ansprüche 1-7,
- Befestigen (1002) des nabenseitigen Endes des Rotorblatts (108) an einem an der Nabe (110) angeordneten Blattlager (200).

13. Verfahren (1000) nach dem vorhergehenden Anspruch,
**gekennzeichnet durch**:
- Vorspannen (1003), insbesondere hydraulisches Vorspannen, der Blattbefestigungsbolzen (140),
- Aufschrauben (1004) von Muttern auf die Blattbefestigungsbolzen (140),
- teilweises Entspannen (1005) der Blattbefestigungsbolzen (140),
- wobei das Vorspannen und/oder Aufschrauben und/oder Entspannen vorzugsweise durch ein sich in Umfangsrichtung erstreckendes Langloch (112) eines radial nach innen kragenden Flansches (111) an einem lagernahen Ende der Nabe (110) hindurch erfolgt.

14. Verfahren (1000) nach mindestens einem der beiden vorhergehenden Ansprüche,
**gekennzeichnet durch**:
- Schaffen eines Zugangs in den Zwischenraum (350) zwischen der Außenumfangsfläche (108u) des nabenseitigen Endes des Rotorblatts (108) und dem lagernahen Abschnitt (310) der Lagerabdeckung (300), vorzugsweise zu Inspektions-, Wartungs-oder Reparaturzwecken, und/oder Aufnehmen mindestens eines Funktionselements, insbesondere einer Handhabungsvorrichtung (510) und/oder einer Inspektionsvorrichtung (520), durch eine Durchgangsöffnung (500) in radialer Richtung am nabenseitigen Ende des Rotorblatts (108), und vorzugsweise Überprüfen von in einem zwischen der Außenumfangsfläche (108u) des nabenseitigen Endes des Rotorblatts (108) und dem lagernahen Abschnitt (310) der Lagerabdeckung (300) gebildeten Zwischenraum (350) befindlichen Elementen, wie beispielsweise einer Lagerverschraubung zur Befestigung des feststehenden Teils (210) des Blattlagers (200), und/oder
- Arretieren des Rotorblatts (108) gegenüber der Nabe (110), insbesondere um eine Drehbewegung des Rotorblatts (108) gegenüber der Nabe (110) zu verhindern, vorzugsweise mittels einer Arretierungsvorrichtung (400), die vorzugsweise einen Arretierzapfen aufweist, der vorzugsweise ausgebildet ist, um mit einem Blattbefestigungsbolzen (140), insbesondere dem Kopf (141) eines Blattbefestigungsbolzens (140), in Eingriff zu treten.

## Claims

1. A rotor blade (108) for a rotor (106) of a wind power installation (100), the rotor blade (108) comprising a hub-side end (108n) for fastening the rotor blade (108) to a movable part (220) of a blade bearing (200),
wherein a bearing cover (300) is arranged on an outer circumferential surface of the hub-side end (108u) of the rotor blade (108),
wherein a portion of the bearing cover (300) that is close to the bearing (310) is further away from the outer circumferential surface of the hub-side end of the rotor blade (108) than a portion of the bearing cover (300) that is remote from the bearing (330) by a multiple,
**characterized in that** provision is made of a sealing element (370) which at least partially seals off and/or covers a gap between the outer circumferential surface of the hub-side end (108u) of the rotor blade (108) and that portion of the bearing cover (300) which is remote from the bearing (330)

2. The rotor blade (108) as claimed in the preceding claim,
wherein an intermediate space (350) is formed between the outer circumferential surface of the hub-side end (108u) of the rotor blade (108) and that portion of the bearing cover (300) which is close to the bearing (310), and serves for accommodating a portion of a fixed part (210) of the blade bearing (200).

3. The rotor blade (108) as claimed in at least either of the preceding claims, wherein the rotor blade (108) has at its hub-side end a multiplicity of blade blind holes for receiving blade fastening bolts (14) for fastening the rotor blade (108) to a movable part of a blade bearing (200) of a hub (110) of a rotor (106) of a wind power installation (100).

4. The rotor blade (108) as claimed in at least one of the preceding claims, wherein that portion of the bearing cover (300) which is remote from the bearing and that portion of the bearing cover (300) which is close to the bearing (310) are arranged substantially parallel to one another and/or radially spaced apart from one another, and/or
wherein the bearing cover (300) has an intermediate portion (320) which is arranged between the portion remote from the bearing (330) and the portion close to the bearing (310) and which is preferably arranged substantially orthogonally to the portion remote from the bearing (330) and/or to the portion close to the bearing (310).

5. The rotor blade (108) as claimed in at least one of the preceding claims, **characterized in that** portion of the bearing cover (300) which is remote from the bearing and that portion thereof which is close to the bearing are connected to one another via the intermediate portion (320), wherein, preferably, a transition from the portion remote from the bearing to the intermediate portion (320) and/or a transition from the portion close (310) to the bearing to the intermediate portion (320) is of rounded form, and/or
**characterized in that** the bearing cover (300) is of annular form and/or has multiple part-ring segments which are preferably connected to one another, and/or
wherein the bearing cover (300), in particular via its portion remote from the bearing, is fastened, preferably in a detachable manner, to the outer circumferential surface of the hub-side end (108u) of the rotor blade (108), and or.
**characterized in that** the region of the fastening of the bearing cover (300) on the outer circumferential surface of the hub-side end (108u) of the rotor blade (108), there are arranged compensation elements, for example in the form of shims.

6. The rotor blade (108) as claimed in at least one of the preceding claims, wherein the fixed part (210) of the blade bearing (200) is formed as a nose ring and the movable part (220) of the blade bearing (200) is formed as a U-ring, in particular as a split U-ring, or
wherein the movable part (220) of the blade bearing (200) is formed as a nose ring and the fixed part (210) of the blade bearing (200) is formed as a U-ring, in particular as a split U-ring.

7. The rotor blade (108) as claimed in at least one of the preceding claims, wherein the hub-side end of the rotor blade (108) has at least one passage opening (500) in a radial direction, wherein the passage opening (500)is preferably configured for providing an access into the intermediate space (350) between the outer circumferential surface (108u) of the hub-side end of the rotor blade (108) and the portion (310) of the bearing cover (300) that is close to the bearing, in particular for inspection, maintenance or repair purposes, and/or for receiving at least one functional element, in particular a handling device and/or an inspection device, through the passage opening (500).

8. A rotor (106) for a wind power installation (100), comprising a hub (110) which has a blade bearing (200) and has a rotor blade as claimed in at least one of the preceding claims, which rotor blade (108) is fastened to the blade bearing (200).

9. The rotor (106) as claimed in the preceding claim,
wherein the hub (110) has a radially inwardly projecting flange (111) at the end close to the bearing, wherein the flange (111) preferably has a circumferentially extending slot (112) as access to blade fastening bolts by which the rotor blade (108) is fastened to the movable part of the bearing, and/or
wherein the hub (110) has at the end close to the bearing a multiplicity of hub blind holes (242) for receiving bearing fastening bolts (240) for fastening a fixed part (210) of a blade bearing (200) to the hub (110).

10. The rotor (106) as claimed in at least either of the two preceding claims, **characterized by** an arresting device (400) by which the rotor blade (108) can be arrested in relation to the hub (110), in particular so as to prevent a rotational movement of the rotor blade (108) in relation to the hub (110), wherein the arresting device (400) preferably has an arresting pin (410), wherein the arresting pin is preferably configured to engage with a blade fastening bolt (140), in particular the head (141) of a blade fastening bolt (140).

11. A wind power installation (100) having a rotor blade (108) as claimed in at least one of the preceding claims 1-7 and/or having a rotor (106) as claimed in at least one of the preceding claims 8-10.

12. A method (1000) for connection of a rotor blade (108) at a hub (110) of a rotor of a wind power installation (100),
comprising:
- provision (1001) of a rotor blade (108) as claimed in at least one of the preceding claims 1-7,
- fastening (1002) of the hub-side end of the rotor blade (108) to a blade bearing (200) arranged on the hub (110).

13. The method (1000) as claimed in the preceding claim,
**characterized by**:
- pretensioning (1003), in particular hydraulic pretensioning, of the blade fastening bolts (140),
- screwing (1004) of nuts onto the blade fastening bolts (140),
- partial release of tension (1005) of the blade fastening bolts (140),
- wherein the pretensioning and/or screwing-on and/or release of tension are preferably realized through a circumferentially extending slot (112) of a radially inwardly projecting flange (111) at an end of the hub (110) that is close to the bearing.

14. The method (1000) as claimed in at least either of the two preceding claims, **characterized by**:
- Providing an access into the intermediate space (350) between the outer circumferential surface (108u) of the hub-side end of the rotor blade (108) and the portion (130) of the bearing cover (300) that is close to the bearing, in particular for inspection, maintenance or repair purposes, and/or receiving at least one functional element, in particular a handling device (510) and/or an inspection device (520), through a passage opening (500) in a radial direction at the hub-side end of the rotor blade (108), and preferably inspecting elements that are situated in an intermediate space (350) between the outer circumferential surface (108u) of the hub-side end of the rotor blade (108) and the portion (310) of the bearing cover (300) that is close to the bearing, such as for example a screw fitting for fastening of the fixed part (210) of the blade bearing (200), and/or
- Arresting the rotor blade (108) in relation to the hub (110), in particular so as to prevent a rotational movement of the rotor blade (108) in relation to the hub (110), preferably using an arresting device (400), which preferably has an arresting pin, wherein the arresting pin is preferably configured to engage with a blade fastening bolt (140), in particular the head (141) of a blade fastening bolt (140).

## Revendications

1. Pale de rotor (108) pour un rotor (106) d'une éolienne (100),
la pale de rotor (108) comprenant une extrémité côté moyeu (108n) pour la fixation de la pale de rotor (108) sur une partie mobile (220) d'un palier de pale (200),
dans laquelle un recouvrement de palier (300) est disposé sur une surface périphérique extérieure (108u) de l'extrémité côté moyeu de la pale de rotor (108),
dans laquelle une section proche du palier (310) du recouvrement de palier (300) est davantage éloignée d'un multiple de la surface périphérique extérieure de l'extrémité côté moyeu de la pale de rotor (108) qu'une section éloignée du palier (330) du recouvrement de palier (300),
**caractérisée en ce qu'**est prévu un élément d'étanchéité (370), qui étanchéifie et/ou recouvre au moins en partie une fente entre la surface périphérique extérieure (108u) de l'extrémité côté moyeu de la pale de rotor (108) et la section éloignée du palier (330) du recouvrement de palier (300).

2. Pale de rotor (108) selon la revendication précédente, **caractérisée en ce qu'**est formé un espace intermédiaire (350) pour recevoir une section d'une partie immobile (210) du palier de pale (200) entre la surface périphérique extérieure (108u) de l'extrémité côté moyeu de la pale de rotor (108) et la section proche du palier (310) du recouvrement de palier (300).

3. Pale de rotor (108) selon au moins l'une quelconque des revendications précédentes,
**caractérisée en ce que** la pale de rotor (108) présente sur son extrémité côté moyeu une pluralité de trous borgnes de pale pour recevoir des boulons de fixation de pale (14) pour fixer la pale de rotor (108) sur une partie mobile d'un palier de pale (200) d'un moyeu (110) d'un rotor (106) d'une éolienne (100).

4. Pale de rotor (108) selon au moins l'une quelconque des revendications précédentes, **caractérisée en ce que** la section éloignée du palier du recouvrement de palier (300) et la section proche du palier (310) du recouvrement de palier (300) sont disposées sensiblement de manière parallèle l'une par rapport à l'autre et/ou à distance radialement l'une de l'autre, et/ou
**caractérisée en ce que** le recouvrement de palier (300) présente une section intermédiaire (320), qui est disposée entre la section éloignée du palier (330) et la section proche du palier (310) et est disposée de préférence sensiblement de manière orthogonale par rapport à la section éloignée du palier (330) et/ou à la section proche du palier (310).

5. Pale de rotor (108) selon au moins l'une quelconque des revendications précédentes, **caractérisée en ce que** la section éloignée du palier et la section proche du palier du recouvrement de palier (300) sont reliées l'une à l'autre par l'intermédiaire de la section intermédiaire (320), dans laquelle de préférence une transition de la section éloignée du palier vers la section intermédiaire (320) et/ou une transition de la section proche du palier (310) vers la section intermédiaire (320) sont réalisées de manière arrondie, et/ou
**caractérisée en ce que** le recouvrement de palier (300) est réalisé de manière annulaire et/ou présente plusieurs segments partiellement annulaires de préférence reliés les uns aux autres, et/ou
**caractérisée en ce que** le recouvrement de palier (300) est fixé, de préférence de manière amovible, en particulier par l'intermédiaire de sa section éloignée du palier, sur la surface périphérique extérieure (108u) de l'extrémité côté moyeu de la pale de rotor (108), et/ou
**caractérisée en ce que** des éléments de compensation, par exemple sous la forme de disques, sont disposés dans la zone de la fixation du recouvrement de palier (300) sur la surface périphérique extérieure (108u) de l'extrémité côté moyeu de la pale de rotor (108).

6. Pale de rotor (108) selon au moins l'une quelconque des revendications précédentes, **caractérisée en ce que** la partie immobile (210) du palier de pale (200) est réalisée en tant qu'anneau d'ergot et la partie mobile (220) du palier de pale (200) est réalisée en tant qu'anneau en U, en particulier en tant qu'anneau en U divisé,
ou
**caractérisée en ce que** la partie mobile (220) du palier de pale (200) est réalisée en tant qu'anneau d'ergot et la partie immobile (210) du palier de pale (200) est réalisée en tant qu'anneau en U, en particulier en tant qu'anneau en U divisé.

7. Pale de rotor (108) selon au moins l'une quelconque des revendications précédentes, **caractérisée en ce que** l'extrémité côté moyeu de la pale de rotor (108) présente au moins une ouverture de passage (500) dans la direction radiale, dans laquelle l'ouverture de passage (500) est réalisée de préférence pour créer un accès dans l'espace intermédiaire (350) entre la surface périphérique extérieure (108u) de l'extrémité côté moyeu de la pale de rotor (108) et la section proche du palier (310) du recouvrement de palier (300), de préférence à des fins d'inspection, de maintenance ou de réparation, et/ou pour loger au moins un élément fonctionnel, en particulier un dispositif de manipulation et/ou un dispositif d'inspection, à travers l'ouverture de passage (500) de part en part.

8. Rotor (106) pour une éolienne (100), comprenant un moyeu (110) avec un palier de pale (200) et une pale de rotor (108) selon au moins l'une quelconque des revendications précédentes fixée sur un palier de pale (200).

9. Rotor (106) selon la revendication précédente, **caractérisé en ce que** le moyeu (110) présente sur l'extrémité proche du palier un rebord (111) en porte-à-faux vers l'intérieur radialement, dans lequel le rebord (111) présente de préférence un trou oblong (112) s'étendant dans la direction périphérique en tant qu'accès aux boulons de fixation de pale, avec lesquels la pale de rotor (108) est fixée sur la partie mobile du palier, et/ou
**caractérisé en ce que** le moyeu (110) présente sur l'extrémité proche du palier une pluralité de trous borgnes de moyeu (242) pour loger des boulons de fixation de palier (240) pour la fixation d'une partie immobile (210) d'un palier de pale (200) sur le moyeu (110).

10. Rotor (106) selon au moins l'une quelconque des deux revendications précédentes, **caractérisé par** un dispositif d'arrêt (400), avec lequel la pale de rotor (108) peut être arrêtée par rapport au moyeu (110), en particulier pour empêcher un déplacement par rotation de la pale de rotor (108) par rapport au moyeu (110), dans lequel le dispositif d'arrêt (400) présente de préférence un tourillon d'arrêt (410), qui est réalisé de préférence pour venir en prise avec un boulon de fixation de pale (140), en particulier la tête (141) d'un boulon de fixation de pale (140).

11. Eolienne (100) avec la pale de rotor (108) selon au moins l'une quelconque des revendications précédentes 1 - 7 et/ou avec un rotor (106) selon au moins l'une quelconque des revendications précédentes 8-10.

12. Procédé (1000) pour relier une pale de rotor (108) sur un moyeu (110) d'un rotor d'une éolienne (100),
comprenant :
- la fourniture (1001) d'une pale de rotor (108) selon au moins l'une quelconque des revendications précédentes 1 - 7,
- la fixation (1002) de l'extrémité côté moyeu de la pale de rotor (108) sur un palier de pale (200) disposé sur le moyeu (110).

13. Procédé (1000) selon la revendication précédente, **caractérisé par** :
- la précontrainte (1003), en particulier la précontrainte hydraulique, des boulons de fixation de pale (140),
- le vissage (1004) d'écrous sur les boulons de fixation de pale (140),
- le desserrage (1005) partiel des boulons de fixation de pale (140),
- dans lequel la précontrainte et/ou le vissage et/ou le desserrage sont effectués de préférence à travers un trou oblong (112) de part en part s'étendant dans la direction périphérique, d'un rebord (111) en porte-à-faux vers l'intérieur radialement sur une extrémité proche du palier du moyeu (110).

14. Procédé (1000) selon au moins l'une quelconque des deux revendications précédentes,
**caractérisé par** :
- la création d'un accès dans l'espace intermédiaire (350) entre la surface périphérique extérieure (108u) de l'extrémité côté moyeu de la pale de rotor (108) et la section proche du palier (310) du recouvrement de palier (300), de préférence à des fins d'inspection, de maintenance ou de réparation, et/ou le logement d'au moins un élément fonctionnel, en particulier d'un dispositif de manipulation (510) et/ou d'un dispositif d'inspection (520), par une ouverture de passage (500) dans la direction radiale sur l'extrémité côté moyeu de la pale de rotor (108), et de préférence la vérification d'éléments se trouvant dans un espace intermédiaire (350) formé entre la surface périphérique extérieure (108u) de l'extrémité côté moyeu de la pale de rotor (108) et la section proche du palier (310) du recouvrement de palier (300), comme un vissage de palier pour la fixation de la partie immobile (210) du palier de pale (200), et/ou
- l'arrêt de la pale de rotor (108) par rapport au moyeu (110), en particulier pour empêcher un déplacement par rotation de la pale de rotor (108) par rapport au moyeu (110), de préférence au moyen d'un dispositif d'arrêt (400), qui présente de préférence un tourillon d'arrêt qui est réalisé de préférence pour venir en prise avec un boulon de fixation de pale (140), en particulier la tête (141) d'un boulon de fixation de pale (140).
